# EUROPEAN PATENT APPLICATION

(11) **EP 4 160 540 A1**
(43) Date of publication of application: **05.04.2023**
(21) Application number: 22187038.9
(22) Date of filing: 26.07.2022
(51) Int. Cl.: G06T 11/60, G06T 19/20, H04N 5/232, H04N 5/262, H04N 1/00, G06F 3/04845

(54) **METHOD AND APPARATUS FOR PRODUCING SPECIAL EFFECT, ELECTRONIC DEVICE AND STORAGE MEDIUM**

(30) Priority: 29.09.2021 CN 202111155725
(71) Applicant: Beijing Dajia Internet Information Technology Co., Ltd., Beijing 100085 (CN)
(72) Inventor: LONG, Qi, Haidian District, 100085 (CN); DONG, Xue, Haidian District, 100085 (CN)
(74) Representative: Attfield, Andrew John

(57) **Abstract**

The present disclosure relates to a method and apparatus for producing a special effect, an electronic device and a storage medium, and the method includes: displaying, in response to receiving an operation for adding a target special effect, a target special effect type corresponding to the target special effect; displaying, in response to receiving an operation for determining a display position of the target special effect, a position identifier of the target special effect in a reference image of a display interface; displaying, in response to receiving a preview operation for the target special effect, the target special effect in a preview image of the display interface according to position information corresponding to the position identifier of the target special effect; and generating special effect data according to the position information corresponding to the position identifier of the target special effect and the target special effect type. The embodiments of the present disclosure can improve efficiency of producing the special effect.

## Description

### TECHNICAL FIELD

The present disclosure relates to the field of image processing technologies, and in particular, to a method and apparatus for producing a special effect, an electronic device and a storage medium.

### BACKGROUND

With the development of computer technologies, an application scope of intelligent terminals has been widely expanded. When photos or videos are taken by the intelligent terminals, not only built-in camera software at the factory can used to achieve photo and video effects with conventional functions, but also applications (APPs) downloaded from a network end can be used to achieve photo or video effects with additional special effect functions. For example, special effect data can be called upon photographing, and corresponding special effects can be displayed at specific positions of a face in an image based on the special effect data.

In the related art, in a case where the special effect data is to be generated, after a special effect designer has determined a corresponding display position of the special effect in the image, a program engineer manually writes the display position in a program to specify the position where the special effect is displayed in the image, and then the corresponding special effect data is acquired. In this method, the display position of the special effect is manually written, which may lead to low efficiency of producing the special effect.

### SUMMARY

The present disclosure provides a method and apparatus for producing a special effect, an electronic device and a storage medium, so as to at least solve a problem of low efficiency of producing the special effect in the related art. The technical solutions of the present disclosure are as follows.

According to an aspect of the present disclosure, there is provided a computer implemented method for producing a special effect, and the method includes:
displaying, in response to receiving an operation for adding a target special effect, a target special effect type corresponding to the target special effect;
displaying, in response to receiving an operation for determining a display position of the target special effect, a position identifier of the target special effect in a reference image of a display interface;
displaying, in response to receiving a preview operation for the target special effect, the target special effect in a preview image of the display interface according to position information corresponding to the position identifier of the target special effect; and
generating special effect data according to the position information corresponding to the position identifier of the target special effect and the target special effect type.

Optionally, the number of position identifiers of the target special effect is multiple, and the generating the special effect data according to the position information corresponding to the position identifier of the target special effect and the target special effect type includes:
displaying, in response to receiving an operation for determining a position identifier to be adjusted, the position identifier to be adjusted, wherein the position identifier to be adjusted includes at least one of the position identifiers;
displaying a special effect parameter setting area corresponding to the position identifier to be adjusted in the display interface according to the target special effect type;
displaying, in response to receiving an operation for setting a special effect parameter in the special effect parameter setting area, the special effect parameter of a target special effect corresponding to the position identifier to be adjusted in the special effect parameter setting area; and
generating the special effect data according to the target special effect type, the position information corresponding to the position identifier of the target special effect, and the special effect parameter of the target special effect corresponding to each position identifier.

Optionally, the displaying, in response to receiving the operation for setting the special effect parameter in the special effect parameter setting area, the special effect parameter of the target special effect corresponding to the position identifier to be adjusted in the special effect parameter setting area includes:
displaying, in response to receiving an operation for adjusting the position identifier to be adjusted, the special effect parameter of the target special effect corresponding to the position identifier to be adjusted in the special effect parameter setting area, and
wherein, the operation for adjusting the position identifier to be adjusted includes: an operation for moving a position of the position identifier to be adjusted and/or an operation for rotating an angle of the position identifier to be adjusted.

Optionally, the display interface includes a material setting area corresponding to the target special effect type, and the material setting area includes at least one material addition item; and
the generating the special effect data according to the position information corresponding to the position identifier of the target special effect and the target special effect type includes:
displaying, in response to receiving an operation for triggering a target material addition item, material data corresponding to the target material addition item, wherein the target material addition item is any one of the material addition items; and
generating the special effect data according to the position information corresponding to the position identifier of the target special effect, the target special effect type and the material data corresponding to the target material addition item.

Optionally, before the generating the special effect data according to the position information corresponding to the position identifier of the target special effect and the target special effect type, the method further includes:
acquiring an image coordinate system of the reference image in the display interface, wherein a preset reference part contained in the reference image is taken as an origin of the image coordinate system, and wherein the reference image includes a face image and/or a human body image; and
acquiring coordinate information of the position identifier in the image coordinate system, and using the coordinate information as the position information of the position identifier.

According to an aspect of the present disclosure, there is provided an apparatus for producing a special effect, and the apparatus includes:
a first display unit, configured to display, in response to receiving an operation for adding a target special effect, a target special effect type corresponding to the target special effect;
a second display unit, configured to display, in response to receiving an operation for determining a display position of the target special effect, a position identifier of the target special effect in a reference image of a display interface;
a third display unit, configured to display, in response to receiving a preview operation for the target special effect, the target special effect in a preview image of the display interface according to position information corresponding to the position identifier of the target special effect; and
a generation unit, configured to generate special effect data according to the position information corresponding to the position identifier of the target special effect and the target special effect type.

Optionally, the number of position identifiers of the target special effect is multiple, and the generation unit includes:
a first display subunit, configured to display, in response to receiving an operation for determining a position identifier to be adjusted, the position identifier to be adjusted, wherein the position identifier to be adjusted includes at least one of the position identifiers;
a second display subunit, configured to display a special effect parameter setting area corresponding to the position identifier to be adjusted in the display interface according to the target special effect type;
a third display subunit, configured to display, in response to receiving an operation for setting a special effect parameter in the special effect parameter setting area, the special effect parameter of a target special effect corresponding to the position identifier to be adjusted in the special effect parameter setting area; and
a first generation subunit, configured to generate the special effect data according to the target special effect type, the position information corresponding to the position identifier of the target special effect, and the special effect parameter of the target special effect corresponding to each position identifier.

Optionally, the third display subunit is further configured to:
display, in response to receiving an operation for adjusting the position identifier to be adjusted, the special effect parameter of the target special effect corresponding to the position identifier to be adjusted in the special effect parameter setting area, and
wherein, the operation for adjusting the position identifier to be adjusted includes: an operation for moving a position of the position identifier to be adjusted and/or an operation for rotating an angle of the position identifier to be adjusted.

Optionally, the display interface includes a material setting area corresponding to the target special effect type, and the material setting area includes at least one material addition item; and the generation unit includes:
a fourth display subunit, configured to display, in response to receiving an operation for triggering a target material addition item, material data corresponding to the target material addition item, wherein the target material addition item is any one of the material addition items; and
a second generation subunit, configured to generate the special effect data according to the position information corresponding to the position identifier of the target special effect, the target special effect type and the material data corresponding to the target material addition item.

Optionally, the apparatus for producing the special effect further includes:
a first acquisition unit, configured to acquire an image coordinate system of the reference image in the display interface, wherein a preset reference part contained in the reference image is taken as an origin of the image coordinate system, and wherein the reference image includes a face image and/or a human body image; and
a second acquisition unit, configured to acquire coordinate information of the position identifier in the image coordinate system, and use the coordinate information as the position information of the position identifier.

According to an aspect of the present disclosure, there is provided an electronic device, including:
a processor; and
a memory configured to store executable instructions of the processor;
wherein, the processor is configured to execute the instructions to implement the method for producing the special effect described in any one of the foregoing aspects.

According to an aspect of the present disclosure, there is provided a computer-readable storage medium, wherein instructions in the computer-readable storage medium, when executed by a processor of an electronic device, cause the electronic device to execute the method for producing the special effect described in any one of the foregoing aspects.

According to an aspect of the present disclosure, there is provided a computer program product including instructions, wherein the instructions, when executed by a processor of an electronic device, cause the electronic device to execute the method for producing the special effect described in any one of the foregoing aspects.

The technical solutions provided by the examples of the present disclosure bring at least the following beneficial effects:

In the method and apparatus for producing the special effect, the electronic device and the storage medium provided by the examples of the present disclosure, the target special effect type corresponding to the target special effect can be displayed in response to the operation for adding the target special effect being received, and then the position identifier of the target special effect is displayed in the reference image of the display interface, in response to the operation for determining the display position of the target special effect being received; thereafter, the target special effect is displayed in the preview image of the display interface according to the position information corresponding to the position identifier of the target special effect, in response to the preview operation for the target special effect being received, and the special effect data is generated according to the position information corresponding to the position identifier of the target special effect and the target special effect type. Based on the method and apparatus for producing the special effect, the electronic device and the storage medium provided by the examples of the present disclosure, a user can set the display position of the target special effect in the special effect data in the reference image of the display interface by means of visual interaction, without manually writing the display position of the special effect in the program, which can improve accuracy of setting the display position of the special effect and improve efficiency of producing the special effect.

It should be noted that the above general description and the following detailed description are merely exemplary and explanatory and should not be construed as limiting of the disclosure.

### BRIEF DESCRIPTION OF THE DRAWINGS

The accompanying drawings, which are incorporated into and constitute a part of the present disclosure, illustrate examples consistent with the present disclosure and, together with the description, serve to explain the principle of the present disclosure, and do not impose any improper limitation on the present disclosure.
FIG. 1 is a diagram of an application environment of a method for producing a special effect according to an example of the present disclosure.
FIG. 2 is a flowchart of a method for producing a special effect according to an example of the present disclosure.
FIGS. 3a-3b are schematic interface diagrams of a method for producing a special effect according to an example of the present disclosure.
FIGS.4a-4b are schematic interface diagrams of a method for producing a special effect according to an example of the present disclosure.
FIGS. 5a-5b are schematic interface diagrams of a method for producing a special effect according to an example of the present disclosure.
FIG. 6 is a flowchart of a method for producing a special effect according to an example of the present disclosure.
FIG. 7 is a flowchart of a method for producing a special effect according to an example of the present disclosure.
FIG. 8 is a schematic interface diagram of a method for producing a special effect according to an example of the present disclosure.
FIG. 9 is a flowchart of a method for producing a special effect according to an example of the present disclosure.
FIG. 10 is a block diagram of an apparatus for producing a special effect according to an example of the present disclosure.
FIG. 11 is a block diagram of an electronic device according to an example of the present disclosure.

### DETAILED DESCRIPTION

In order to make a person skilled in the art better understand the technical solutions of the present disclosure, the following clearly and completely describes the technical solutions in example of the present disclosure with reference to the accompanying drawings.

It should be noted that in the present specification, the claims, and the accompanying drawings of the present disclosure, the terms "first", "second", and so on are intended to distinguish similar objects but do not necessarily indicate a specific order or sequence. It is to be understood that data (or any element) termed in such a way is interchangeable in proper circumstances, so that the embodiments of the present disclosure described herein may be implemented in other sequences than the sequence illustrated or described herein. The implementations set forth in the following description of the embodiments do not represent all implementations consistent with the present disclosure. Instead, they are merely examples of devices and methods consistent with aspects related to the present disclosure as recited in the appended claims.

It should also be noted that user information (including but not limited to user device information, user personal information, etc.) and data (including but not limited to display data, analysis data, etc.) involved in the present disclosure are information and data authorized by a user or fully authorized by various parties.

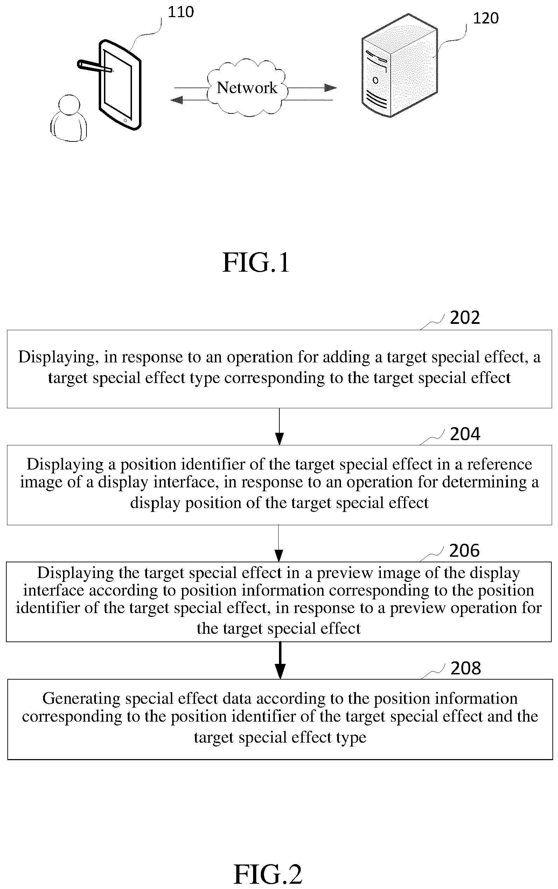

A method for producing a special effect provided by the present disclosure can be applied to an application environment shown in FIG. 1. A terminal 110 is in interaction with a server 120 through a network, which includes: after generating corresponding special effect data in response to a user's operation for generating the special effect data, the terminal 110 publishes the special effect data to the server 120 through the network. After receiving the special effect data sent by the terminal 110, the server 120 updates a special effect database according to the special effect data, so that the user can load and use the special effect data from the special effect database. The terminal 110 can be, but is not limited to, various personal computers, laptops, smart phones, tablet computers, and portable wearable devices. The server 120 can be an independent server or a server cluster composed of multiple servers.

FIG. 2 is a flowchart of a method for producing a special effect according to an embodiment of the present disclosure. As shown in FIG. 2, the method for producing the special effect is applied to a terminal, and includes the following steps 202 to 208.

In the step 202, in response to an operation for adding a target special effect, a target special effect type corresponding to the target special effect is displayed.

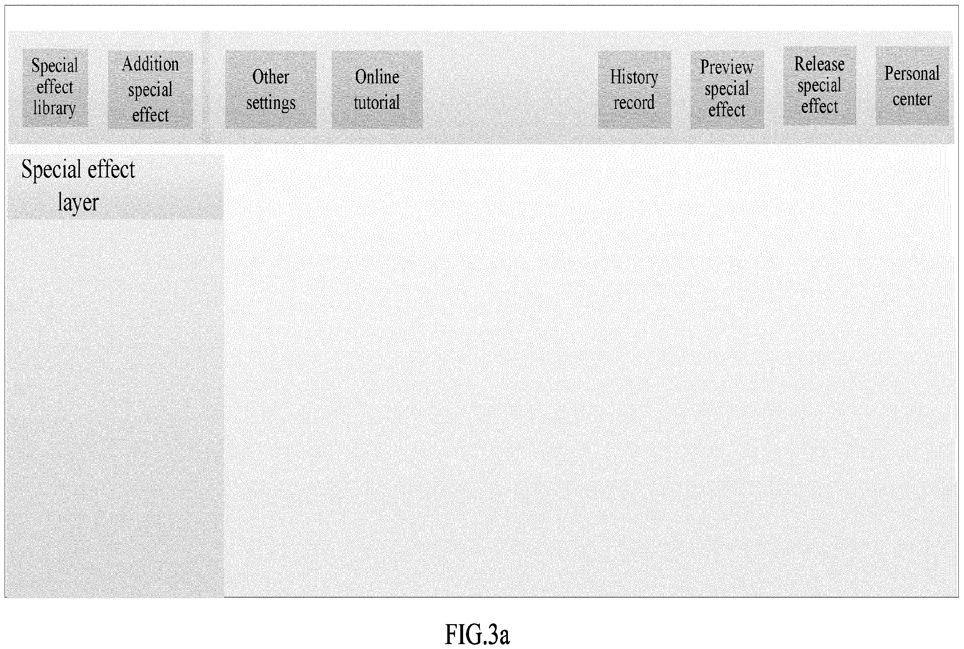

In the embodiments of the present disclosure, the terminal may display a configuration interface in a display interface in response to a configuration operation of special effect data. Referring to FIG. 3a, the configuration interface may include a target special effect type configuration area, and the target special effect type configuration area may include a special effect library control and/or an addition special effect control.

A user can display a special effect library interface by triggering the special effect library control, and the special effect library interface may include a query box and/or a drop-down menu. The user can input the target special effect type in the query box, or the user can search for the target special effect type from special effect types displayed in the drop-down menu, and after finding the target special effect type, use the found target special effect type by a selection operation on the target special effect type.

Alternatively, the user can upload a special effect stored locally in the terminal as the target special effect by triggering the addition special effect control, and use a special effect type of the special effect as the target special effect type.

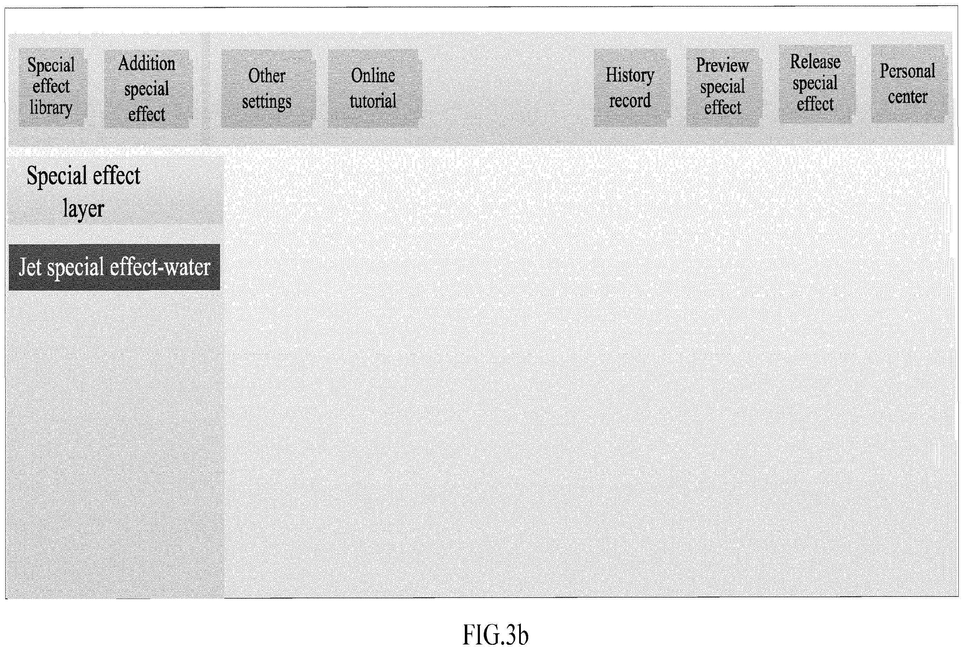

After the target special effect type corresponding to the target special effect is determined, the target special effect type can be displayed in a display area of the target special effect type in the configuration interface. For example, the display area of the target special effect type is as shown in FIG. 3b. The target special effect type displayed in the display area of the target special effect type in FIG. 3b is "jet special effect-water".

In the step 204, in response to an operation for determining a display position of the target special effect, a position identifier of the target special effect is displayed in a reference image of the display interface.

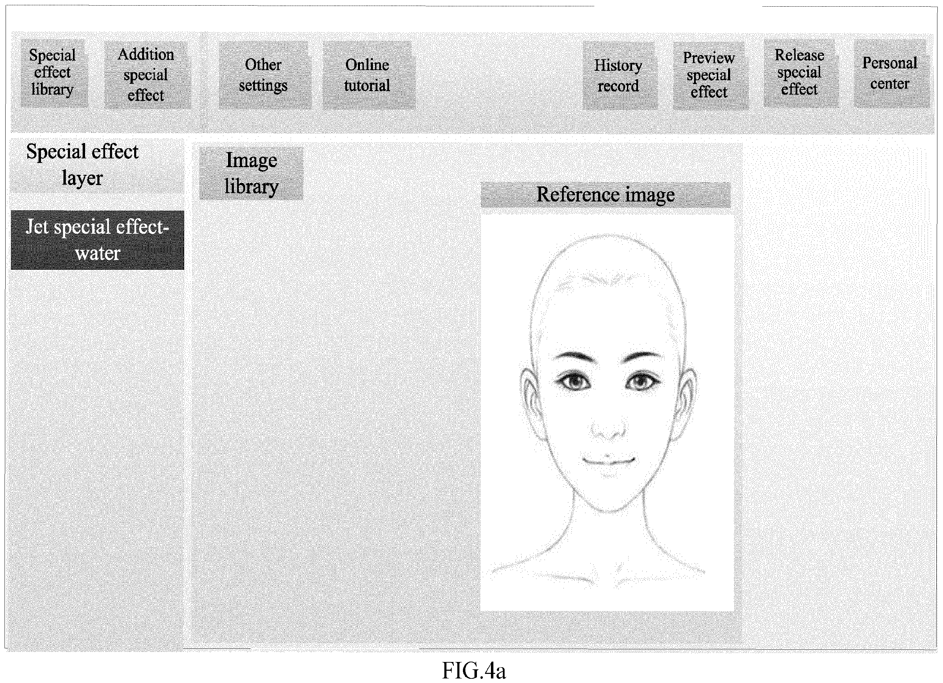

In the embodiments of the present disclosure, the reference image may be displayed in the configuration interface of the display interface, and the reference image may include but is not limited to a face image and/or a human body image (the face image is taken as an example in the embodiments of the present disclosure). After the target special effect type is determined, the corresponding reference image can be determined according to the target special effect type. For example, when the target special effect corresponding to the target special effect type is a special effect for a human face, the face image can be acquired from an image library as the reference image; or, when the target special effect corresponding to the target special effect type is a special effect for a human body part, the human body image can be acquired from the image library as the reference image; or, the user can select an image from the image library as the reference image according to requirements, and the terminal can use the image selected by the user as the reference image. After the reference image is determined, the reference image is displayed in a first image display area of the configuration interface, for example, as shown in FIG. 4a.

The user can select the display position of the target special effect in the reference image based on the requirements. In some embodiments of the present disclosure, the configuration interface includes a display position setting control, and the terminal can enable a display position setting mode in response to a user's triggering operation on the display position setting control. In the display position setting mode, when receiving a user's triggering operation on the reference image, the terminal can determine that a position corresponding to the triggering operation in the reference image is the display position of the target special effect, and display the position identifier corresponding to the target special effect at the display position.

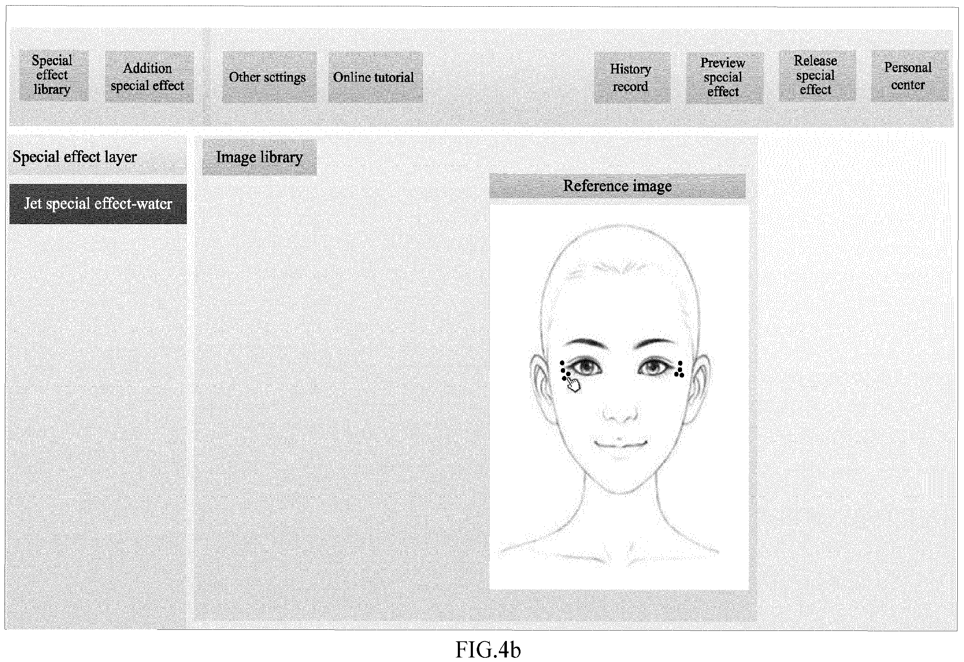

The triggering operation on the reference image may include an operation such as a single click, a double click, a touch, etc. performed on the reference image, and the terminal may use a position corresponding to the operation such as the single click, the double click, the touch, etc. in the reference image as the display position of the target special effect. Each time the terminal receives the triggering operation on the reference image, it can display one position identifier at the position corresponding to the triggering operation, for example, as shown in FIG. 4b.

It should be noted that the position identifier is used to identify the display position of the target special effect, and can be displayed in various forms. For example, as shown in FIG. 4b, the position identifier is represented in the form of dot, and in practice, the form of the position identifier can also be a rectangle form, a star-shaped form, and the form of the position identifier is not specifically limited by the embodiments of the present disclosure.

In the step 206, in response to a preview operation for the target special effect, the target special effect is displayed in a preview image of the display interface according to position information corresponding to the position identifier of the target special effect.

In the embodiments of the present disclosure, in response to the preview operation for the target special effect, the display position of the target special effect in the preview image of the display interface can be acquired according to the position information corresponding to the position identifier of the target special effect, and the targeted effect can be displayed at the display position in the preview image of the display interface.

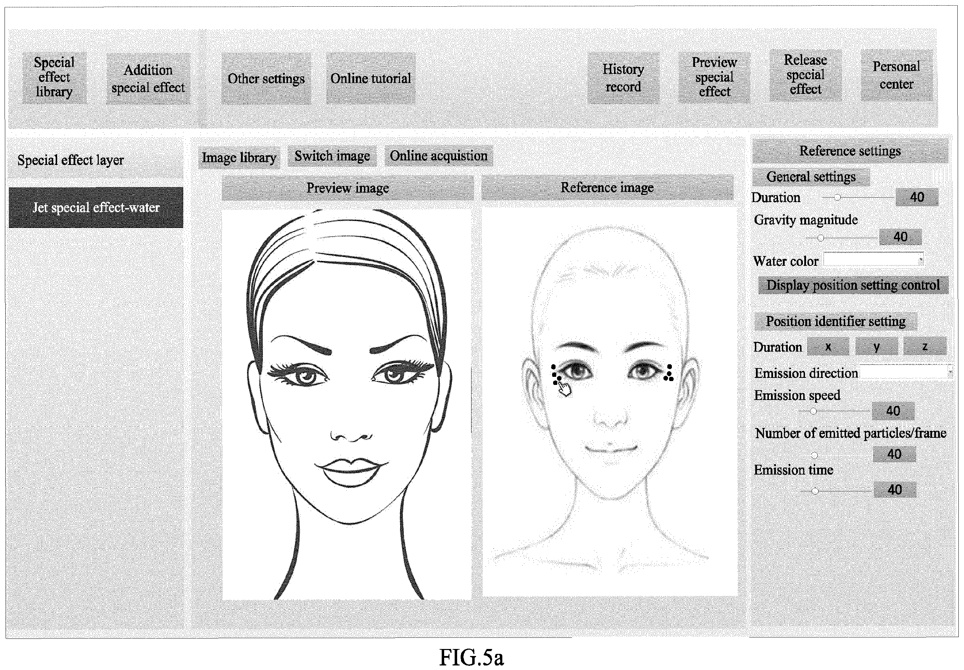

In some embodiments of the present disclosure, the preview image may be displayed in a second image display area of the configuration interface, as shown in FIG. 5a. The preview image may be an image selected by the user from the image library or a video frame image in the selected video data, and the preview image may be the same as or different from the reference image. Alternatively, the preview image may be an image acquired in real time or a video frame image in video data acquired in real time by an image acquisition apparatus of the terminal, which is not specifically limited by the embodiments of the present disclosure.

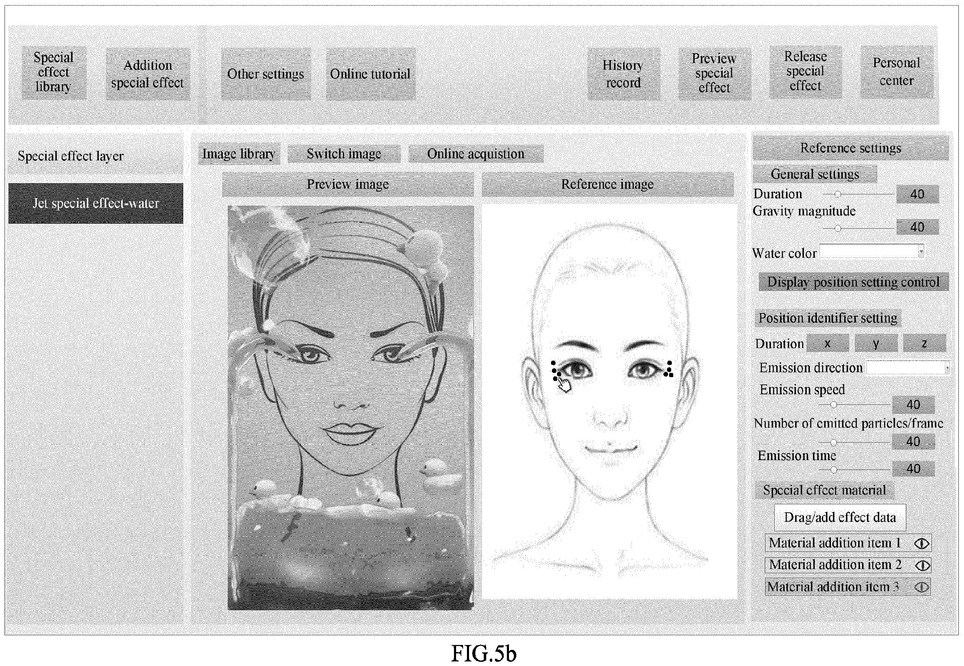

In some embodiments of the present disclosure, the configuration interface may include a preview mode triggering control, and the terminal may enable a preview mode in response to a user's triggering operation on the preview mode triggering control. In the preview mode, after determining the position information corresponding to the position identifier of the target special effect, the terminal can determine each display position of the target special effect in the preview image according to the position information of each position identifier, and display the target special effect at each display position in the preview image, as shown in FIG. 5b.

In some embodiments of the present disclosure, when the user adjusts a special effect parameter of any position identifier, the target special effect displayed at this position identifier can be displayed in the corresponding preview image in response to the adjustment of the special effect parameter. The user can intuitively know an effect of the target special effect after adjustment through the preview image, and determine whether it is suitable, so as to make adjustment in time when the effect is not suitable.

In the method for producing the special effect provided by the embodiments of the present disclosure, during a process of generating the special effect data, the target special effect can be correspondingly displayed in the preview image according to a relevant setting for the target special effect, so that the user can intuitively determine whether the setting for the target special effect is accurate, and make the corresponding adjustment on information such as the display position of the target special effect in time when the setting is inaccurate, which can improve the efficiency of producing the special effect to a certain extent.

In the step 208, the special effect data is generated according to the position information corresponding to the position identifier of the target special effect and the target special effect type.

For example, the configuration interface may include a release control. The user may trigger the release control after setting the position identifier of the target special effect, and the terminal may, in response to a user's triggering operation on the release control, acquire program data of the target special effect according to the target special effect type, acquire the position information corresponding to each position identifier of the target special effect in the reference image, and generate the special effect data according to the program data of the target special effect and the position information corresponding to each position identifier in the reference image.

After the special effect data is acquired, the special effect data can be sent to a server, so that the server can publish the special effect data to the special effect database for the user to download and use. Taking the target special effect configured in the foregoing embodiments as an example, when the user runs the special effect data, the target special effect will be displayed at a corresponding position in the face image according to the position information of the position identifier. In the method for producing the special effect provided by the embodiments of the present disclosure, the target special effect type corresponding to the target special effect can be acquired in response to the operation for adding the target special effect, and then the position identifier of the target special effect is displayed in the reference image of the display interface, in response to the operation for determining the display position of the target special effect; thereafter, the special effect data is generated according to the position information corresponding to the position identifier of the target special effect and the target special effect type. Based on the method for producing the special effect provided by the embodiments of the present disclosure, the user can set the display position of the target special effect in the special effect data in the reference image of the display interface by means of visual interaction, without manually writing the display position of the special effect in the program, which can improve accuracy of setting the display position of the special effect and improve efficiency of producing the special effect.

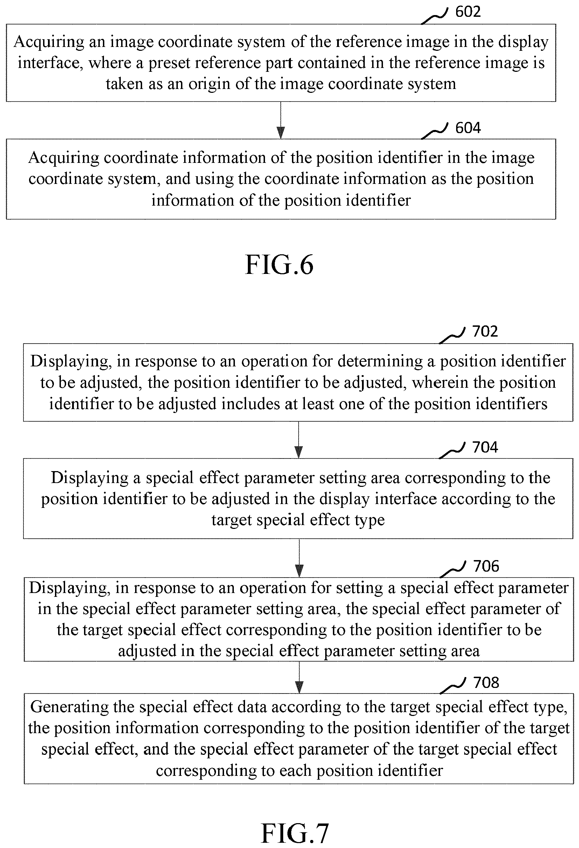

Optionally, as shown in FIG. 6, before the generating the special effect data according to the position information corresponding to the position identifier of the target special effect and the target special effect type in the step 208, the above-mentioned method further includes:
in step 602, an image coordinate system of the reference image in the display interface is acquired, and the image coordinate system takes a preset reference part contained in the reference image as an origin, the reference image includes the face image and/or the human body image; and
in step 604, coordinate information of the position identifier in the image coordinate system is acquired, and the coordinate information is used as the position information of the position identifier.

In the embodiments of the present disclosure, the image coordinate system may be established by taking the preset reference part of the reference image as the origin. The preset reference part may be a preset part, such as eyes, nose, eyebrows, etc., which is not specifically limited by the embodiments of the present disclosure. For example, the corresponding preset reference part may be acquired according to the target special effect type, or the preset reference part may be determined in response to a user's setting operation for the preset reference part. Taking FIG. 4a as example, the preset reference part is a corner of the eyes, and the image coordinate system can be established by taking the corner of the eyes in the human face in the reference image as the origin and the established image coordinate system is acquired.

After the image coordinate system is acquired, in response to the operation for determining the display position of the target special effect, a pixel point triggered by the operation in the reference image is determined, coordinate information of the pixel point in the image coordinate system is determined, and the coordinate information is used as the position information of the position identifier.

After the special effect data is published, when the user applies the special effect data, the terminal on the user side can track a preset reference part of the user in the acquired image in response to the special effect data, establish a corresponding coordinate system with the preset reference part as the origin, and display, after determining the coordinate information corresponding to the position information of the position identifier in the coordinate system, the target special effect at the determined coordinate information.

Taking the example shown in FIG. 4b as an example, when a proportion of the face in the face image is similar to a proportion of the face in the reference image, the coordinate information corresponding to the position information of the position identifier can be directly used as the coordinate information corresponding to the target special effect in the face image. Alternatively, when the proportion of the face in the face image is inconsistent with the proportion of the face in the reference image, the coordinate information corresponding to the position information of the position identifier in the coordinate system can be scaled according to the proportion of the face in the face image and the proportion of the face in the reference image to acquire the corresponding coordinate information of the target special effect in the face image.

In the method for producing the special effect provided by the embodiments of the present disclosure, the user can set the display position of the target special effect in the special effect data in the reference image of the display interface by means of the visual interaction, and acquire the position information corresponding to the display position through the image coordinate system established in the reference image, without manually writing the display position of the special effect in the program, which can improve the accuracy of setting the display position of the special effect and improve the efficiency of producing the special effect.

Optionally, the number of position identifiers of the target special effect is multiple, and as shown in FIG. 7, the generating the special effect data according to the position information corresponding to the position identifier of the target special effect and the target special effect type in the step 208 can be achieved by the following steps:
in step 702, in response to an operation for determining a position identifier to be adjusted, the position identifier to be adjusted is displayed, and the position identifier to be adjusted includes at least one position identifier;
in step 704, a special effect parameter setting area corresponding to the position identifier to be adjusted is displayed in the display interface according to the target special effect type;
in step 706, in response to an operation for setting a special effect parameter in the special effect parameter setting area, a special effect parameter of a target special effect corresponding to the position identifier to be adjusted is displayed in the special effect parameter setting area; and
in step 708, the special effect data is generated according to the target special effect type, the position information corresponding to the position identifier of the target special effect, and the special effect parameter of the target special effect corresponding to each position identifier.

In some embodiments of the present disclosure, in the display position setting mode, the terminal may disable the display position setting mode in response to the user's triggering operation on the display position setting control. After the display position setting mode is disabled, when the terminal receives the user's triggering operation on the reference image, it no longer displays the position identifier according to the received triggering operation.

In this case, there are multiple position identifiers of the target special effect displayed in the reference image. The display effect of the target special effect is related to the special effect parameter of the target special effect, so when the user intends to adjust the display effect of the target special effect displayed at a certain position identifier, the user can adaptively set or adjust the special effect parameter of the target special effect at this position identifier.

In some embodiments of the present disclosure, in response to the operation for determining the position identifier to be adjusted, at least one position identifier can be determined from the displayed multiple position identifiers as the position identifier to be adjusted. That is, the user can select one or more position identifiers as the position identifier to be adjusted. The terminal can display the special effect parameter setting area in the configuration interface, and the special effect parameter setting area can display a configuration item of each special effect parameter of the target special effect at the position identifier to be adjusted. The special effect parameter corresponding to any configuration item except a configuration item corresponding to the position information has an initial value during the initial display.

Different special effects have different special effect parameters, so the terminal can acquire, according to the target special effect type, the configuration items corresponding to its special effects parameters and display the configuration item corresponding to each special effect parameter in the special effect parameter setting area. The user can configure each special effect parameter through the configuration item corresponding to each special effect parameter. For example, the terminal can receive a user's configuration operation for any configuration item, and configure the special effect parameter corresponding to the configuration item. The configuration operation includes, but is not limited to, inputting a parameter value in an input box, selecting the parameter value from the drop-down menu, selecting the parameter value by sliding a control, etc..

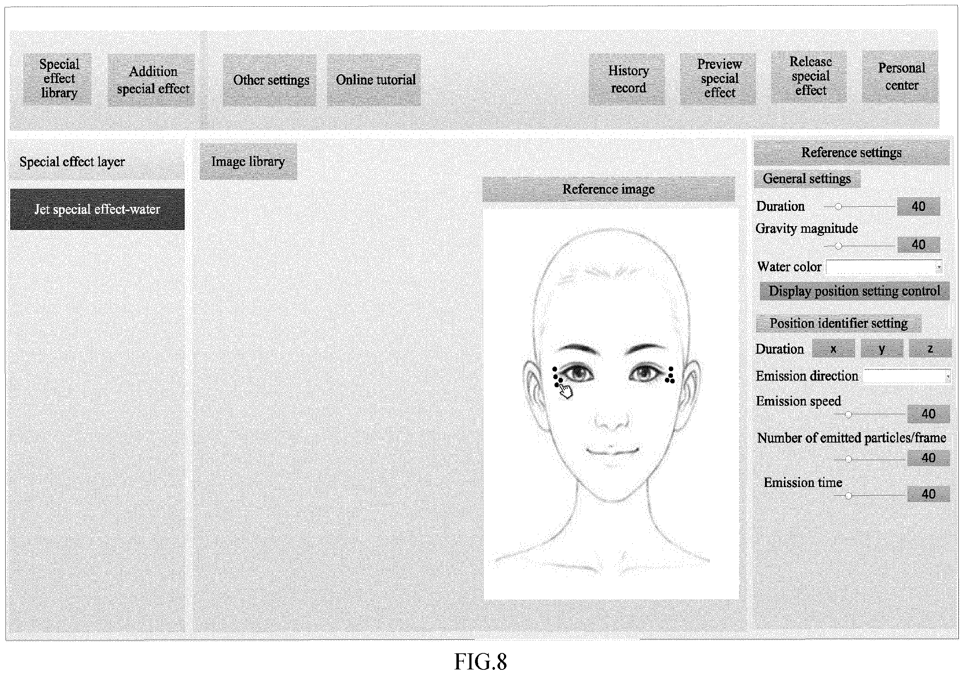

In some embodiments of the present disclosure, the target special effect is "jet special effect-water". Referring to FIG. 8, the special effect parameter setting area includes configuration items of special effect parameters corresponding to this target special effect. In FIG. 8, the configuration items of the special effect parameters include: a duration configuration item (used to set or adjust a display duration of the target special effect corresponding to the position identifier to be adjusted), a water color configuration item (used to set or adjust a water color of the target special effect corresponding to the position identifier to be adjusted), a movement configuration item (used to adjust a position of the position identifier to be adjusted), a gravity configuration item (used to adjust a jet gravity effect of the target special effect corresponding to the position identifier to be adjusted), an emission direction configuration item (used to adjust the emission direction of an emitter of the target special effect corresponding to the position identifier to be adjusted), an emission speed configuration item (used to adjust the emission speed of the emitter of the target special effect corresponding to the position identifier to be adjusted), an item for configuring the number of emitted particles/frame configuration item (used to adjust the number of particles emitted by the emitter of the target special effect corresponding to the position identifier to be adjusted), and an emission time configuration item (used to adjust the emission time of the emitter of the target special effect corresponding to the position identifier to be adjusted).

As shown in FIG. 8, the user can acquire the special effect parameter adjusted by the configuration item through the configuration operation on any configuration item to be adjusted. For example, for the emission direction configuration item, the user can select the corresponding emission direction from the drop-down menu, and the terminal can acquire the selected emission direction in response to the selection operation, and display the emission direction in the emission direction configuration item. For the emission speed configuration item, the user can configure the emission speed by sliding the control to a specified position. In response to the sliding operation, the terminal can determine and acquire the emission speed corresponding to the specified position, and display the emission speed in the emission speed configuration item.

After completing the configuration of the special effect parameter, the terminal can acquire the special effect parameter of each position identifier, and generate the special effect data according to the special effect parameter and the position information of each position identifier, and the target special effect type. For example, the program data of the target special effect is acquired according to the target special effect type, and is combined with the special effect parameter and the position information of each position identifier of the target special effect to obtain the corresponding special effect data.

In the method for producing the special effect provided by the embodiments of the present disclosure, the user can set the special effect parameter corresponding to the target special effect in the special effect data at each position identifier in the special effect parameter setting area of the display interface by means of the visual interaction, without manually writing the special effect parameter of the special effect in the program. In addition, special effect parameters corresponding to multiple position identifiers can be set in batches simultaneously, which can improve the efficiency of producing the special effect.

Optionally, the displaying, in response to the operation for setting the special effect parameter in the special effect parameter setting area, the special effect parameter of the target special effect corresponding to the position identifier to be adjusted in the special effect parameter setting area in the step 706 can be specifically achieved by the following steps:
displaying the special effect parameter of the target special effect corresponding to the position identifier to be adjusted in the special effect parameter setting area, in response to an operation for adjusting the position identifier to be adjusted, and
the operation for adjusting the position identifier to be adjusted includes: an operation for moving a position of the position identifier to be adjusted and/or an operation for rotating an angle of the position identifier to be adjusted.

In the embodiments of the present disclosure, adjustment data may be acquired in response to the operation for adjusting the position identifier to be adjusted, and according to the adjustment data, the special effect parameter of the target special effect corresponding to the position identifier to be adjusted is displayed in the special effect parameter setting area.

For example, the user may make corresponding adjustment on the position identifier to be adjusted to adjust the special effect parameter of the target special effect corresponding to the position identifier to be adjusted. In response to the corresponding adjustment operation on the position identifier to be adjusted made by the user, the terminal can acquire the adjustment data corresponding to the adjustment operation, determine the special effect parameter of the target special effect according to the adjustment data, and display the special effect parameter of the target special effect corresponding to the position identifier to be adjusted in the special effect parameter setting area.

In some embodiments of the present disclosure, the operation for adjusting the position identifier to be adjusted may include the operation for moving the position of the position identifier to be adjusted. The user can drag the position identifier to be adjusted to move the position of the position identifier to be adjusted. In response to the user's dragging operation on the position identifier to be adjusted, the terminal can acquire a dragging distance, determine the position information of the position identifier to be adjusted after dragging according to the dragging distance and current position information of the position identifier to be adjusted, and move the position identifier to be adjusted to a position corresponding to this position information for display. In addition, the adjusted position information is displayed in a configuration item corresponding to the position information in the special effect parameter setting area corresponding to the position identifier to be adjusted.

In some embodiments of the present disclosure, the operation for adjusting the position identifier to be adjusted may include the operation for rotating the angle of the position identifier to be adjusted. When the terminal receives a user's operation of selecting the position identifier to be adjusted, it displays an angle adjustment control on the selected position identifier to be adjusted in a superimposed manner. In response to a user's rotation operation on the angle adjustment control, the terminal acquires an angle rotated by the rotation operation, determine angle information of the position identifier to be adjusted after rotation according to the angle and angle information currently corresponding to the position identifier to be adjusted, and display the adjusted angle information in a configuration item corresponding to the angle information in the special effect parameter setting area corresponding to the position identifier to be adjusted.

In the method for producing the special effect provided by the embodiments of the present disclosure, the user can adjust the position identifier on the display interface to adjust the special effect parameter corresponding to the target special effect at each position identifier by means of the visual interaction, without manually writing the special effect parameter of the special effect in the program. In addition, the special effect parameters corresponding to the multiple position identifiers can be set in batches simultaneously, which can improve the efficiency of producing the special effect.

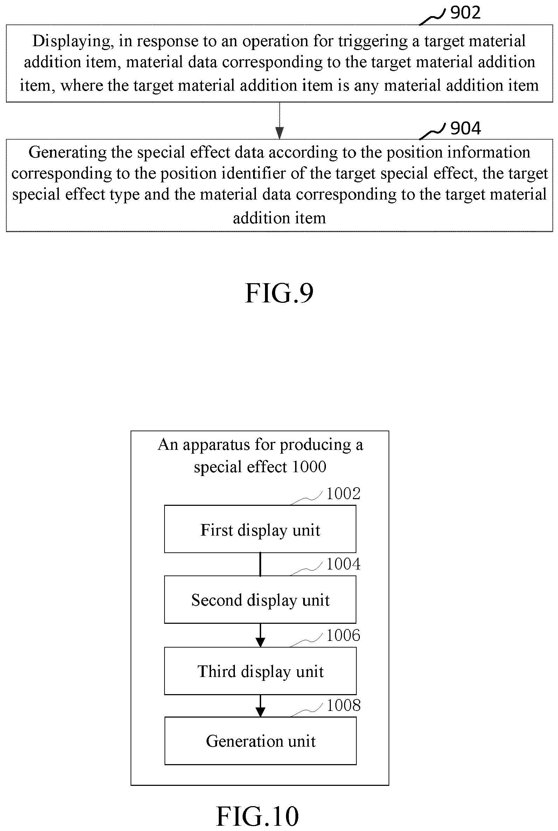

Optionally, the display interface includes a material setting area corresponding to the target special effect type, and the material setting area includes at least one material addition item. As shown in FIG. 9, the generating the special effect data according to the position information corresponding to the position identifier of the target special effect and the target special effect type in the step 208 can be specifically achieved by the following steps:
in step 902, in response to an operation for triggering a target material addition item, material data corresponding to the target material addition item is displayed, and the target material addition item is any one of the material addition items; and
in step 904, the special effect data is generated according to the position information corresponding to the position identifier of the target special effect, the target special effect type and the material data corresponding to the target material addition item.

In some embodiments of the present disclosure, the target special effect may include at least one special effect material. For example, as shown in FIG. 5b, "little ducks" are the material data corresponding to the special effect material included in the "jet special effect-water". The configuration interface includes the material setting area. After a target special effect identifier corresponding to the target special effect is determined, if the target special effect has the special effect material, the corresponding material addition item can be displayed in the material setting area according to the special effect material in the target special effect. That is, if the target special effect includes several special effect materials, several corresponding material addition items are displayed in the material setting area, and the material addition items correspond to respective special effect materials one by one.

By triggering a display identifier in the material addition item, the user can determine the final display of the special effect material corresponding to the material addition item, that is, the final generated special effect data includes the special effect material corresponding to the material addition item. If the display identifier in the material addition item is not triggered, it is determined that the special effect material corresponding to the material addition item will not be finally displayed, that is, the final generated special effect data does not include the special effect material corresponding to the material addition item.

In some embodiments of the present disclosure, as shown in FIG. 5b, the "jet special effect-water" includes three special effect materials, that is, three material addition items are displayed correspondingly. The display identifiers corresponding to the material addition item 1 and the material addition item 2 are triggered, and the display identifier corresponding to the material addition item 3 is not triggered, that is, the final generated special effect data includes the special effect materials corresponding to the material addition item 1 and the material addition item 2, but does not include the special effect material corresponding to the material addition item 3.

The user can also set the material data corresponding to the special effect material displayed in the target special effect in a customized manner. For example, each special effect material has preset material data, and for any special effect material, in a case where the user does not set the material data in the customized manner, the displayed special effect material is the preset material data. Alternatively, in a case where the user sets the material data in the customized manner, the preset material data can be replaced with the material data customized by the user, and the displayed special effect material is the material data customized by the user.

In some embodiments of the present disclosure, after the user determines to display the special effect material corresponding to the material addition item by triggering the display identifier in the material addition item, the user can further select the material addition item to be set in the customized manner. After the customized material data is acquired through operations such as uploading/downloading for the material data in the material addition area, the customized material data is used to replace the preset material data of the material addition item to be set in the customized manner.

After completing the setting of the material data, the terminal can generate the special effect data according to the position information of each position identifier, the target special effect type (or, it may also include information such as the special effect parameter of the target special effect), and the material data corresponding to each target material addition item. For example, the program data of the target special effect is acquired according to the target special effect type, and is combined with the position information of each position identifier of the target special effect and the material data corresponding to each target material addition item to obtain the corresponding special effect data.

In the method for producing the special effect provided by the embodiments of the present disclosure, the user can customize the material data to be displayed in the display interface, which can enrich the method for producing the special effect and improve the user experience.

It should be understood that although various steps in the flowcharts of FIG. 1 to FIG. 9 are sequentially displayed as indicated by arrows, these steps are not necessarily sequentially performed in an order indicated by these arrows. Unless otherwise clearly specified in the present specification, these steps are performed without any strict sequence limit, and may be performed in other orders. In addition, at least some steps in FIG. 1 to FIG. 9 may include a plurality of steps or a plurality of stages, and these steps or stages are not necessarily performed at a same time instant, but may be performed at different time instants. The steps or stages are not necessarily performed in sequence, and the steps or stages may be performed alternately with at least some of other steps, sub-steps or stages of other steps.

It can be understood that, the same/similar parts among the various embodiments of the above methods in this specification can be referred to each other, and each embodiment focuses on the points that are different from other embodiments, and for related parts, reference can be made to the description of other method embodiments.

FIG. 10 is a block diagram of an apparatus for producing a special effect according to an embodiment of the present disclosure. Referring to FIG. 12, the apparatus includes a first display unit 1002, a second display unit 1004, a third display unit 1006, and a generation unit 1008.

The first display unit 1002 is configured to display, in response to an operation for adding a target special effect, a target special effect type corresponding to the target special effect.

The second display unit 1004 is configured to display a position identifier of the target special effect in a reference image of a display interface, in response to an operation for determining a display position of the target special effect.

The third display unit 1006 is configured to display the target special effect in a preview image of the display interface according to position information corresponding to the position identifier of the target special effect, in response to a preview operation for the target special effect.

The generation unit 1008 is configured to generate special effect data according to the position information corresponding to the position identifier of the target special effect and the target special effect type.

In the apparatus for producing the special effect provided by the embodiments of the present disclosure, the target special effect type corresponding to the target special effect can be displayed in response to the operation for adding the target special effect, and then the position identifier of the target special effect is displayed in the reference image of the display interface, in response to the operation for determining the display position of the target special effect; thereafter, the special effect data is generated according to the position information corresponding to the position identifier of the target special effect and the target special effect type. Based on the apparatus for producing the special effect provided by the embodiments of the present disclosure, the user can set the display position of the target special effect in the special effect data in the reference image of the display interface by means of visual interaction, without manually writing the display position of the special effect in the program, which can improve accuracy of setting the display position of the special effect and improve efficiency of producing the special effect.

Optionally, the number of position identifiers of the target special effect is multiple, and the generation unit 1008 includes:
a first display subunit, configured to display, in response to an operation for determining a position identifier to be adjusted, the position identifier to be adjusted, and the position identifier to be adjusted includes at least one of the position identifiers;
a second display subunit, configured to display a special effect parameter setting area corresponding to the position identifier to be adjusted in the display interface according to the target special effect type;
a third display subunit, configured to display, in response to an operation for setting a special effect parameter in the special effect parameter setting area, the special effect parameter of the target special effect corresponding to the position identifier to be adjusted in the special effect parameter setting area; and
a first generation subunit, configured to generate the special effect data according to the target special effect type, the position information corresponding to the position identifier of the target special effect, and the special effect parameter of the target special effect corresponding to each position identifier.

Optionally, the third display subunit is further configured to:
display the special effect parameter of the target special effect corresponding to the position identifier to be adjusted in the special effect parameter setting area, in response to an operation for adjusting the position identifier to be adjusted; and
the operation for adjusting the position identifier to be adjusted includes: an operation for moving a position of the position identifier to be adjusted and/or an operation for rotating an angle of the position identifier to be adjusted.

Optionally, the display interface includes a material setting area corresponding to the target special effect type, and the material setting area includes at least one material addition item; and the generation unit includes:
a fourth display subunit, configured to display, in response to an operation for triggering a target material addition item, material data corresponding to the target material addition item, and the target material addition item is any material addition item; and
a second generation subunit, configured to generate the special effect data according to the position information corresponding to the position identifier of the target special effect, the target special effect type and the material data corresponding to the target material addition item.

Optionally, the apparatus for producing the special effect further includes:
a first acquisition unit, configured to acquire an image coordinate system of the reference image in the display interface, and a preset reference part contained in the reference image is taken as an origin of the image coordinate system, and the reference image includes a face image and/or a human body image; and
a second acquisition unit, configured to acquire coordinate information of the position identifier in the image coordinate system, and use the coordinate information as the position information of the position identifier.

Regarding the apparatus in the above-mentioned embodiments, a specific manner in which each module performs operations has been described in detail in the method embodiments and will not be described in detail here.

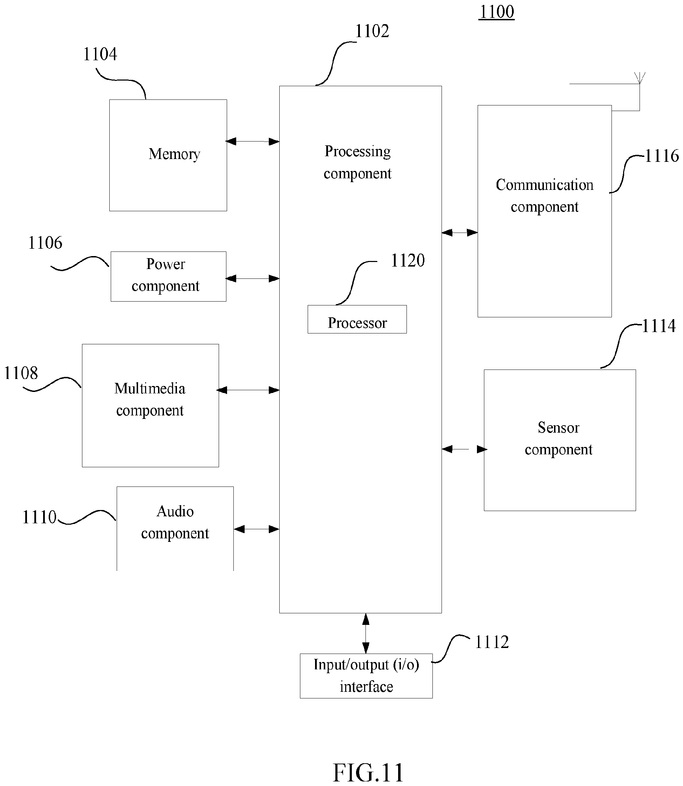

FIG. 11 is a block diagram of an electronic device 1100 for a method for producing a special effect data according to an embodiment of the present disclosure. For example, the electronic device 1100 may be a mobile phone, a computer, a digital broadcast terminal, a messaging device, a game console, a tablet device, a medical device, a fitness device, a personal digital assistant, and the like.

Referring to FIG. 11, the electronic device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the electronic device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the electronic device 1100. Examples of such data include instructions for any applications or methods operated on the electronic device 1100, contact data, phonebook data, messages, pictures, video, etc. The memory 1104 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic, an optical disk or a graphene memory.

The power component 1106 provides power to various components of the electronic device 1100. The power component 1106 may include a power management system, one or more power sources, and any other components associated with the generation, management, and distribution of power in the electronic device 1100.

The multimedia component 1108 includes a screen providing an output interface between the electronic device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the electronic device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the electronic device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the electronic device 1100. For instance, the sensor component 1114 may detect an open/closed status of the electronic device 1100, relative positioning of components, e.g., the display and the keypad, of the electronic device 1100, a change in position of the electronic device 1100 or a component of the electronic device 1100, a presence or absence of user contact with the electronic device 1100, an orientation or an acceleration/deceleration of the electronic device 1100, and a change in temperature of the electronic device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the electronic device 1100 and other apparatus. The electronic device 1100 may access a wireless network based on a communication standard, such as WiFi, an operator network (e.g., 2G, 3G, 4G or 5G) or a combination thereof. In an embodiment, the communication component 1116 receives a broadcast signal or broadcast associated information from an external broadcast management system via a broadcast channel. In an embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

Optionally, the electronic device 1100 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above described method.

Optionally, there is also provided a computer-readable storage medium including instructions, such as the memory 1104 including instructions, the above instructions may be executed by the processor 1120 in the electronic device 1100 for performing the above-described methods. For example, the computer-readable storage medium may be a ROM, a Random Access Memory (RAM), a CD-ROM, a magnetic tape, a floppy disc, an optical data storage device, and the like.

Optionally, there is also provided a computer program product including instructions, and the instructions can be executed by the processor 1120 of the electronic device 1100 to complete the above-mentioned method.

It should be noted that the descriptions of the apparatus, the electronic device, the computer-readable storage medium, the computer program product, etc. according to the method examples may also include other implementations. For the specific implementations, reference may be made to the descriptions of the related method examples, which will not be repeated here.

Other examples of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure. The specification and examples are considered as exemplary only, and a true scope of the present disclosure is indicated by the appending claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A computer implemented method for producing a special effect, comprising:
displaying (202), in response to receiving an operation for adding a target special effect, a target special effect type corresponding to the target special effect;
displaying (204), in response to receiving an operation for determining a display position of the target special effect, a position identifier of the target special effect in a reference image of a display interface;
displaying (206), in response to receiving a preview operation for the target special effect, the target special effect in a preview image of the display interface according to position information corresponding to the position identifier of the target special effect; and
generating (208) special effect data according to the position information corresponding to the position identifier of the target special effect and the target special effect type.

2. The method according to claim 1, wherein the target special effect has a plurality of position identifiers, and said generating (208) the special effect data according to the position information corresponding to the position identifier of the target special effect and the target special effect type comprises:
displaying (702), in response to receiving an operation for determining the position identifier to be adjusted, a position identifier to be adjusted, wherein the position identifier to be adjusted comprises at least one of the plurality of position identifiers;
displaying (704) a special effect parameter setting area corresponding to the position identifier to be adjusted in the display interface according to the target special effect type;
displaying (706), in response to receiving an operation for setting a special effect parameter in the special effect parameter setting area, the special effect parameter of the target special effect corresponding to the position identifier to be adjusted in the special effect parameter setting area; and
generating (708) the special effect data according to the target special effect type, the position information corresponding to the position identifier of the target special effect, and the special effect parameter of the target special effect corresponding to each position identifier.

3. The method according to claim 2, wherein said displaying (706), in response to receiving the operation for setting the special effect parameter in the special effect parameter setting area, the special effect parameter of the target special effect corresponding to the position identifier to be adjusted in the special effect parameter setting area comprises:
displaying, in response to receiving an operation for adjusting the position identifier to be adjusted, the special effect parameter of the target special effect corresponding to the position identifier to be adjusted in the special effect parameter setting area; and
wherein, the operation for adjusting the position identifier to be adjusted comprises at least one of: an operation for moving a position of the position identifier to be adjusted and an operation for rotating an angle of the position identifier to be adjusted.

4. The method according to any one of claims 1 to 3, wherein the display interface comprises a material setting area corresponding to the target special effect type, and the material setting area comprises at least one material addition item; and
wherein generating (708) the special effect data according to the position information corresponding to the position identifier of the target special effect and the target special effect type comprises:
displaying (902), in response to receiving an operation for triggering a target material addition item, material data corresponding to the target material addition item, wherein the target material addition item is any one of the at least one material addition item; and
generating (904) the special effect data according to the position information corresponding to the position identifier of the target special effect, the target special effect type and the material data corresponding to the target material addition item.

5. The method according to any one of claims 1 to 3, further comprising:
acquiring (602) an image coordinate system of the reference image in the display interface, wherein a preset reference part contained in the reference image is taken as an origin of the image coordinate system, and wherein the reference image comprises a face image and/or a human body image; and
acquiring (604) the position information of the position identifier based on coordinate information of the position identifier in the image coordinate system.

6. An apparatus for producing a special effect, comprising:
a first display unit (1002), configured to display, in response to receiving an operation for adding a target special effect, a target special effect type corresponding to the target special effect;
a second display unit (1004), configured to display, in response to receiving an operation for determining a display position of the target special effect, a position identifier of the target special effect in a reference image of a display interface;
a third display unit (1006), configured to display, in response to receiving a preview operation for the target special effect, the target special effect in a preview image of the display interface according to position information corresponding to the position identifier of the target special effect; and
a generation unit (1008), configured to generate special effect data according to the position information corresponding to the position identifier of the target special effect and the target special effect type.

7. The apparatus for producing the special effect according to claim 6, wherein the target special effect has a plurality of position identifiers, and the generation unit (1008) comprises:
a first display subunit, configured to display, in response to receiving an operation for determining the position identifier to be adjusted, a position identifier to be adjusted, wherein the position identifier to be adjusted comprises at least one of the plurality of position identifiers;
a second display subunit, configured to display a special effect parameter setting area corresponding to the position identifier to be adjusted in the display interface according to the target special effect type;
a third display subunit, configured to display, in response to receiving an operation for setting a special effect parameter in the special effect parameter setting area, the special effect parameter of the target special effect corresponding to the position identifier to be adjusted in the special effect parameter setting area; and
a first generation subunit, configured to generate the special effect data according to the target special effect type, the position information corresponding to the position identifier of the target special effect, and the special effect parameter of the target special effect corresponding to each position identifier.

8. The apparatus for producing the special effect according to claim 7, wherein the third display subunit (1006) is further configured to:
display, in response to receiving an operation for adjusting the position identifier to be adjusted, the special effect parameter of the target special effect corresponding to the position identifier to be adjusted in the special effect parameter setting area; and
wherein, the operation for adjusting the position identifier to be adjusted comprises at least one of: an operation for moving a position of the position identifier to be adjusted and an operation for rotating an angle of the position identifier to be adjusted.

9. The apparatus for producing the special effect according to any one of claims 6 to 8, wherein the display interface comprises a material setting area corresponding to the target special effect type, and the material setting area comprises at least one material addition item; and the generation unit comprises:
a fourth display subunit, configured to display, in response to receiving an operation for triggering a target material addition item, material data corresponding to the target material addition item, wherein the target material addition item is any one of the at least one material addition item; and
a second generation subunit, configured to generate the special effect data according to the position information corresponding to the position identifier of the target special effect, the target special effect type and the material data corresponding to the target material addition item.

10. The apparatus for producing the special effect according to any one of claims 6 to 8, wherein the apparatus for producing the special effect further comprises:
a first acquisition unit, configured to acquire an image coordinate system of the reference image in the display interface, wherein a preset reference part contained in the reference image is taken as an origin of the image coordinate system, and wherein the reference image comprises a face image and/or a human body image; and
a second acquisition unit, configured to acquire the position information of the position identifier based on coordinate information of the position identifier in the image coordinate system.

11. A non-transitory computer-readable storage medium, wherein instructions in the computer-readable storage medium, when executed by a processor of an electronic device, cause the electronic device to execute the method for producing the special effect according to any one of claims 1 to 5.

12. A computer program product comprising instructions, wherein the instructions, when executed by a processor of an electronic device, cause the electronic device to execute the method for producing the special effect according to any one of claims 1 to 5.
